(19)

Europäisches
Patentamt
European
Patent Office
Office européen
des brevets

(11) **EP 2 174 993 A1**

(12) **EUROPEAN PATENT APPLICATION**
published in accordance with Art. 153(4) EPC

(43) Date of publication:
**14.04.2010 Bulletin 2010/15**

(21) Application number: **08740041.2**

(22) Date of filing: **08.04.2008**

(51) Int Cl.:
***C09D 11/00*** (2006.01)   ***H01B 1/22*** (2006.01)
***H01B 13/00*** (2006.01)

(86) International application number:
**PCT/JP2008/056938**

(87) International publication number:
**WO 2009/016863 (05.02.2009 Gazette 2009/06)**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **31.07.2007 JP 2007199876**

(71) Applicant: **Bando Chemical Industries, Ltd.
Kobe-shi, Hyogo 652-0883 (JP)**

(72) Inventors:
• **TOMURA, Takuya
  Hyogo 6520 883 (JP)**
• **YAMADA, Mitsuru
  Hyogo 6520 883 (JP)**

(74) Representative: **Sayettat, Julien Christian
Strato-IP
BL 57 - 14 Rue Soleillet
75020 Paris (FR)**

(54) **CONDUCTIVE INK, CONDUCTIVE COATING THEREFROM AND METHOD FOR PRODUCING THE SAME**

(57)    The electrically conductive ink in accordance with the present invention includes a metal colloid liquid and a saccharide compound, wherein the electrically conductive ink comprises the saccharide compound in an amount equivalent to at least 3% by weight and at a maximum 15% by weight of a solid content of the metal colloid liquid. This way, it is possible to provide an electrically conductive ink making it possible to form an electrically conductive film having a high electrical conductivity and a high adhesiveness to a substrate, to provide an electrically conductive film made from the electrically conductive ink, as well as to provide a production method of the electrically conductive ink and a production method of the electrically conductive film.

**Description**

Technical Field

The present invention relates to an electrically conductive ink making it possible to form an electrically conductive film having a high electrical conductivity and an excellent adhesiveness because the electrically conductive ink contains a determined amount of a saccharide compound, to an electrically conductive film made from the electrically conductive ink, as well as to a method for producing the electrically conductive ink and a method for producing the electrically conductive film.

Background Art

Examples of conventional methods used to produce electrically conductive films encompass the following: (1) vacuum deposition of a metal, chemical vapor deposition, ion sputtering and the like; (2) formation of an electrically conductive film through plating; (3) photolithography; and (4) the like.

The method (1) has the following problems: because it requires operation under vacuum or sealed environment, it is complex to carry out the method (1); it requires a large-scale device, which needs a large space to install and a final cost is high; and it is poorly applicable to mass production. Further, the method (2) has the following problems: it produces a great amount of waste liquid, for which waste disposal treatment is necessary; raw material loss for the method (2) is large, thus resulting in extra costs, and the method (2) is not so environmentally friendly. Additionally, the above method (3) has the following problems: a step of masking a necessary part of the electrically conductive film formed on a substrate must be conducted in addition; further, a photosensitive resin used and a removed metal film, as well as a waste fluid used to dissolve them are produced in great amount, thus resulting in a high cost for waste disposal treatment and environmental burden.

In contrast, a method for applying a coating material (a material to form the electrically conductive film) in pattern onto a substrate does not require any specific device; it does not require a wide space because the production can be undertaken using simple equipment; and it can be conducted at a low cost. Further, because raw material loss and the quantity of waste fluids is almost negligible, this method is advantageous in terms of cost and is more environmentally friendly. As a result, this method is becoming widely used as a manufacturing method for electrically conductive films.

The coating material is conventionally a metallic paste in which silver or other metallic particles are mixed with a resin component and/or an organic solvent, or a so-called electrically conductive ink. In many cases, the coating material is applied by using a dispenser or screen printing, so as to form an electrically conductive film. A recently attempted method is a method in which a low-viscosity metal colloid liquid is used as an electrically conductive ink and is applied in pattern by ink jet, thus forming a wiring pattern.

Conventionally known electrically conductive inks include the following three examples. Patent Literature 1 discloses an electrically conductive ink prepared by uniformly dispersing metallic nanoparticles into a resin composition including an organic solvent. Patent Literature 2 discloses another electrically conductive ink, in which metallic ultrafine particles having a determined mean particle size are dispersed into an organic solvent, the metallic ultrafine particles having a surface covered with a compound having a functional group capable of forming a coordinate bond with a metal of the metallic ultrafine particles, and the compound being thermally dissociable. Patent Literature 3 discloses another electrically conductive ink, which contains silver powder and a determined epoxy resin component.

The solvent of the electrically conductive ink can be either an organic solvent or an inorganic solvent. However, use of an inorganic solvent, especially water is less influential to human body and more environmentally friendly.

Citation List

Patent Literature 1
Japanese Patent Application Publication, Tokukai, No. 2002-324966 A (Publication Date: November 8, 2002)
Patent Literature 2
Japanese Patent Application Publication, Tokukai, No. 2002-334618 A (Publication Date: November 22, 2002)
Patent Literature 3
Japanese Patent Application Publication, Tokukai, No. 2001-261778 A (Publication Date: September 26, 2001)

Summary of Invention

However, regarding the electrically conductive ink disclosed in Patent Literature 1, because a strength of adhesion to a variety of substrates depends on how much the electrically conductive ink is affinitive with an organic resin (resin composition), such a problem generally occurs that minute cracks are likely caused due to gas generated from decomposition of such organic resin component during firing in a reducing atmosphere using hydrogen or nitrogen for forming low-resistive wiring and electrode. Accordingly, with an electrically conductive film formed using the electrically conductive ink disclosed in Patent Literature 1, it is not possible to achieve an electrically conductive film having both a high electrical conductivity and a high adherence to the substrate.

Further, because the electrically conductive ink disclosed in Patent Literature 2 does not include a binder which contributes to a stronger adhesiveness with the substrate, the adhesiveness with the substrate is low; accordingly, such a problem occurs that the electrically conductive ink disclosed in Patent Literature 2 is difficult to use for any purpose other than sintering metallic powder through high-temperature firing.

In addition, even though the electrically conductive ink disclosed in Patent Literature 3 has an excellent adhesiveness, an addition of organic resin is indispensable in order to give adhesiveness to the electrically conductive ink disclosed in Patent Literature 3. However, because the organic resin functions as an insulator, the film inevitably has a high resistivity. Accordingly, with the electrically conductive ink disclosed in Patent Literature 3 as well, such a problem occurs that it is not possible to achieve an electrically conductive ink having both a high electrical conductivity and a high adherence to a substrate, thus limiting a potential usage thereof.

As described above, because no electrically conductive ink having both a high electrical conductivity and a high adhesiveness to a substrate has appeared so far, there has been a demand for development of such an electrically conductive ink.

The present invention was attained in view of the above-described problems. An object of the present invention is to provide an electrically conductive ink making it possible to form an electrically conductive film having a high electrical conductivity and a high adhesiveness to a substrate, to provide an electrically conductive film made from the electrically conductive ink, as well as to provide a production method of the electrically conductive ink and a production method of the electrically conductive film.

The inventors of the present invention diligently studied in order to attain the object. As a result, it was found that by forming an electrically conductive film from an electrically conductive ink containing a determined amount of a saccharide compound, it becomes possible to obtain an electrically conductive film having a high conductivity and a high adhesiveness. The present invention is based on this finding. In addition, it was found that firing of the electrically conductive ink can be conducted at a low heating temperature.

Specifically, an electrically conductive ink in accordance with the present invention includes a metal colloid liquid and a saccharide compound, wherein the electrically conductive ink comprises the saccharide compound in an amount equivalent to at least 3% by weight and at a maximum 15% by weight of a solid content of the metal colloid liquid.

The saccharide compound includes a large number of hydroxyl groups in one molecule, and has an excellent hydrogen bonding ability. Because the electrically conductive ink in accordance with the present invention includes a determined amount of the saccharide compound, it has an excellent water solubility and an excellent hydrogen bonding ability. Accordingly, the electrically conductive ink has a high adhesiveness compared to substrates such as glass, PET (polyethylene terephthalate), PEN (polyethylene naphthalate), and PI (polyimide).

Consequently, it is possible, while maintaining the high conductivity induced by the metal colloid, to obtain a high adhesiveness to the substrate, and thus to obtain an electrically conductive ink having both a high conductivity and a high adhesiveness to the substrate.

Further, the saccharide compound has a relatively rigid structure. Because the electrically conductive ink in accordance with the present invention includes a determined amount of the saccharide compound, it is possible to give a relatively rigid structure to the electrically conductive film. As a result, a melting point thereof is relatively high, and it is possible to form a tough electrically conductive film. In addition, because the electrically conductive ink in accordance with the present invention includes a determined amount of the saccharide compound, a compatibility of the electrically conductive ink with a hydroxy acid, which is a compound having an hydroxyl group similar to that of the saccharide compound, is good. Accordingly, it is possible to avoid losing a dispersion stability of the electrically conductive ink using a hydroxy acid as a dispersing agent.

In the electrically conductive ink in accordance with the present invention, the saccharide compound preferably has a six-membered ring structure and/or a five-membered ring structure.

A saccharide compound having a six-membered ring structure and/or a five-membered ring structure is configured so as to be more rigid than a saccharide compound having a three- or four-membered ring structure and not having a six-membered ring structure and/or a five-membered ring structure, and is also configured so that a number of hydroxyl groups in one molecule is higher. Accordingly, with the above configuration, the electrically conductive ink has a better adhesiveness, and it is possible to form a tougher film.

In the electrically conductive ink in accordance with the present invention, the saccharide compound preferably includes at least one selected from the group consisting of glucose, trehalose, maltosyl-trehalose, isomaltooligosaccharide, reduced maltose, reduced starch saccharide compound, sugar alcohol and hyaluronic acid.

Because all above saccharide compounds have excellent water solubility, it is possible to increase the adhesiveness of the electrically conductive film formed using the electrically conductive ink including a determined amount of the above saccharide compounds.

In the electrically conductive ink in accordance with the present invention, a metal used is preferably more noble than hydrogen in ionization series.

A film made from metal colloid liquid using a metal as above is known as having a high electrical conductivity (for example from Japanese Patent Application Publication, Tokukai, No. 2002-245854). Accordingly, with the above configuration, it is possible to provide with greater certainty an electrically conductive ink allowing the formation of an electrically conductive film having, along with the high adhesiveness induced by the saccharide compound, a high electrical conductivity.

The metal colloid liquid preferably includes the solid content whose main component is particles made from a metallic component and an organic component, and a solvent.

With the above configuration, because the metal colloid liquid includes the organic component, it is possible to increase a dispersion stability of the metal colloid particles in the solution. Accordingly, even if a metallic amount included in the metal colloid is increased, metal colloid particles hardly aggregate and it is possible to maintain a good dispersibility.

A method of producing the electrically conductive ink in accordance with the present invention includes mixing the metal colloid liquid and the saccharide compound, wherein the saccharide compound is mixed in an amount equivalent to at least 3% by weight and at a maximum 15% by weight of the solid content of the metal colloid liquid.

With the present configuration, because a determined amount of the saccharide compound is included in the electrically conductive ink, it is possible to produce an electrically conductive ink having both the high electrical conductivity induced by the metal colloid and the high adhesiveness to the substrate induced by the saccharide compound.

The electrically conductive film in accordance with the present invention is formed using the electrically conductive ink in accordance with the present invention, including the saccharide compound by at least 1% by weight and at a maximum 15% by weight.

With this configuration, because an amount as above of the saccharide compound is included in the film, it is possible to obtain both a high electrical conductivity and a high adhesiveness. As a result, it is possible to form an electrically conductive pattern having excellent electrical conductivity, without any constraint in terms of type of material or in terms of purpose.

A method to produce the electrically conductive film in accordance with the present invention includes: applying the electrically conductive ink in accordance with the present invention to a substrate, or applying the electrically conductive ink in pattern on the substrate; and then firing the electrically conductive ink at a temperature of 300°C or lower, so as to form the electrically conductive film.

With this configuration, because the electrically conductive ink is fired at a relatively low temperature, it is possible to avoid decomposition of the saccharide compound. Accordingly, it is possible to produce an electrically conductive film having both a high conductivity and a high adhesiveness.

A detailed understanding of the other objectives, characteristics and merits of the present invention can be obtained through the ensuing description. Further, the advantages of the present invention will become obvious by referring to the following description taken in conjunction with the accompanying drawings.

Description of Embodiments

The following is a detailed description of the present invention. In the present Description, the wording "weight" will be used as a synonym of "mass", and the wording "% by weight" will be used as a synonym of "% by mass". Further, "between A and B" will be used to mean "not less than A but not more than B". "Main component" will refer to the component being the most abundant in the composition of a compound, preferably constituting 50% by weight or more.

An electrically conductive ink in accordance with the present embodiment includes a metal colloid liquid and a saccharide compound, wherein the electrically conductive ink comprises the saccharide compound in an amount equivalent to at least 3% by weight and at a maximum 15% by weight of a solid content of the metal colloid liquid.

1) Metal colloid liquid

The following is an explanation of a metal colloid liquid used in the present invention and of a composition thereof.

1-1) Metal colloid particles and solid content

In the present Description, the metal colloid liquid is not especially limited provided that the metal colloid liquid contains a metallic component, and the colloid liquid used makes it possible to give electrical conductivity to the electrically conductive ink in accordance with the present invention. Because it is possible to improve the dispersibility of the metallic component, the metal colloid liquid preferably comprises (i) a solid content (hereafter referred to as "metal colloid particles") whose main component is particles made from the metallic component and from an organic component, and (ii) a solvent.

In the present Description, the "solid content" of the metal colloid liquid is a solid content remained after the metal colloid liquid is dried at a temperature of 30°C or lower after most of the solvent is removed from the metal colloid liquid, for example, by using silica gel. The solid content usually contains metal colloid particles, residual dispersing agent and residual reducing agent. The solid content in the metal colloid liquid used in connection with the present invention is preferably comprised within a range between 1% by weight and 70% by weight. In the case that the solid content is less than 1% by weight, an amount of metal included in the produced electrically conductive ink is too small. This results in a low electrical conductivity. Further, in the case that the solid content is over 70% by weight, a viscosity of the metal colloid liquid increases; accordingly, handling thereof becomes difficult, which is disadvantageous for industrial use. The solid content is most preferably comprised within a range between 10% by weight and 65% by weight.

The metal colloid liquid used in the present invention is preferably such that weight loss in the solid content of the metal colloid liquid is 10% by weight or less at temperatures between 100°C and 500°C during a thermogravimetric analysis of the solid content, wherein the thermogravimetric analysis is carried out at a heating rate of 10°C per min. When heating the solid content up to 500°C, organic matter and the like are oxidized and decomposed, and most of the organic matter turns into gas and disappears. As a result, the weight loss due to the heating up to 500°C approximately corresponds to the amount of organic matter in the solid content.

The metal colloid has a better dispersion stability as the weight loss is higher. However, an excessive weight loss means that the organic matter will remain in the electrically conductive ink as impurities, thus lowering conductivity of the electrically conductive film. Especially, in order to obtain an electrically conductive film having high conductivity by heating at a low-temperature (around 100°C), the weight loss is preferably 10% or less by weight. On the other hand, because the stability of the metal colloid liquid is lost in the case that the weight loss is too small, the weight loss is preferably more than 0.01% by weight. The concentration of the solid content is most preferably at least 0.05% by weight and at a maximum 4.5% by weight.

The following are examples of a configuration of the metal colloid particles which must be included in the solid content of the metal colloid: (i) metal colloid particles made from a metallic component attached with an organic component on its surface; (ii) metal colloid particles whose core is a particle made from a metallic component and coated with an organic component; and (iii) a particle in which a metallic component and an organic component are uniformly mixed. However, the configuration of the metal colloid particles is not limited particularly. The metal colloid particle whose core is a particle made from a metallic component coated with an organic component, and the particle in which a metallic component and an organic component are uniformly mixed are preferable. It must be noted that a person having ordinary skill in the art is able, based on conventional technology in the art, to produce as appropriate a metal colloid particle having one of the above-described configurations.

The metal colloid particle has an average diameter preferably of between 1 nm and 400 nm, most preferably of 70 nm or smaller. It is possible to obtain an electrically conductive ink allowing to form a good electrically conductive film even in the case that the average diameter of the metal colloid particle is below 1 nm; generally, however, a manufacturing cost of such an ultrafine metal colloid particle is expensive and impractical. In the case that the average diameter of the metal colloid particle is above 400 nm, the metal colloid particle unlikely has a long-term dispersion stability.

1-2) Metallic component

There is no particular limitation regarding the metallic component. However, in order to obtain a film with a high electrical conductivity, a metal is preferably chosen from the group of metals which are more noble than hydrogen in ionization series. Examples of metals more noble than hydrogen in reactivity series include gold, silver, copper, platinum, palladium, rhodium, iridium, osmium, ruthenium, rhenium, and the like. Among these examples, the most preferable metals are silver, copper, platinum and palladium. These metals may be used separately or in a combination of two or more metals.

In the case that, for example, the metal colloid liquid is a silver colloid liquid, the electrically conductive film formed from the electrically conductive ink will have a good conductivity; however, it will be necessary to take into consideration a problem such as migration. In this regard, it is possible to make migration less likely to happen by using a mixed colloid liquid solution made from silver and another metal. The wording "another metal" refers to one of the above-mentioned metals which are more noble than hydrogen in reactivity series. Specifically, gold, copper, platinum, palladium, rhodium, iridium, osmium, ruthenium, rhenium and the like are preferable, the most preferable being copper, platinum and palladium.

1-3) Organic component

When used in the present Description, the term "organic component" in the metal colloid particles refers to an organic matter that substantially constitutes the metal colloid particles together with the metallic component. For examples, the "organic component" does not mean the following: a trace amount of organic matter originally included as impurities in the metal; a trace amount of organic matter attached to the metallic component as a result of contamination during a manufacturing process (the manufacturing process will be explained below); residual dispersing agent and residual reducing agent which are not completely removed during cleaning process. In this case, the wording "trace amount" specifically refers to an amount of less than 1% by weight in the metal colloid particles.

Because the metal colloid particles contain the organic component, the metal colloid particles in the liquid solution have a high dispersion stability. As a result, metal colloid particles hardly aggregate even if the metallic amount in the metal colloid is increased; therefore, it is possible to maintain a high dispersibility.

An amount of the organic component contained in the metal colloid particles is preferably within a range between 0.5% by weight and 30% by weight. In the case that the amount of organic component included in the metal colloid particles is less than 0.5% by weight, metal colloid particles thus obtained tend to have poor storage stability. In the case that the amount of organic component included in the metal colloid particles is more than 30% by weight, the electrically conductive ink produced using the obtainable metal colloid particles tend to have a poor electrical conductivity. A more preferable range of the amount of organic component included in the metal colloid particles is at least 1% by weight and at a maximum 20% by weight; a even more preferable range of the amount of organic component included in the metal colloid particles is at least 1% by weight and at a maximum 10% by weight.

Examples of organic matter to be used as the organic component include organic matter which can be used as dispersing agent or reducing agent. Examples of dispersing agent include the following: organic acids (for example, citric acid, malic acid, tartaric acid, glycolic acid, etc.), ionic compounds (for example, trisodium citrate, tripotassium citrate, trilithium citrate, monopotassium citrate, disodium hydrogen citrate, potassium dihydrogen citrate, disodium malate, disodium tartrate, potassium tartrate, potassium sodium tartrate, potassium hydrogen tartrate, sodium hydrogen tartrate, sodium glycolate, etc.), surface active agents (for example, sodium dodecylbenzene-sulfonate, sodium oleate, polyoxiethylene alkyl ether, perfluoroalkyl ethylene oxide adduct, etc.), macromolecules (for example, gelatin, gum arabic, albumen, polyethyleneimine, polyvinyl cellulose materials, alkanethiols, etc.). However, there is no limitation in this regard, provided that the organic matter dissolves in the dispersion medium and has a dispersing effect. In addition, the above organic matter may be used separately or in a combination of two or more.

Further, the dispersing agent preferably has a COOH group and an OH group, and is preferably either a hydroxy acid, in which a number of COOH groups is superior or equal to a number of OH groups, or a salt of such a hydroxy acid. By using such a dispersing agent, it is possible to provide an electrically conductive ink allowing the formation of an electrically conductive film having a high conductivity even in the case of a low-temperature (around 100°C) firing. Especially, by using (i) either a hydroxy acid in which a total number of COOH groups and OH groups is 3 or more and in which the number of COOH group is superior or equal to the number of OH group or (ii) a salt of such hydroxy acid, the dispersion stability of the metal colloid particles is improved, thereby making it possible to obtain an electrically conductive film having excellent conductivity.

As examples of such a dispersing agent, organic acids (for example, citric acid, malic acid, tartaric acid, glycolic acid, etc.), ionic compounds (for example, trisodium citrate, tripotassium citrate, trilithium citrate, monopotassium citrate, disodium hydrogen citrate, potassium dihydrogen citrate, disodium malate, disodium tartrate, potassium tartrate, potassium sodium tartrate, potassium hydrogen tartrate, sodium hydrogen tartrate, sodium glycolate, etc.) and the like can be given. Trisodium citrate, tripotassium citrate, trilithium citrate, disodium malate, disodium tartrate and the like are preferable.

There is no particular limitation regarding the reducing agent, provided that a chosen reducing agent appropriately dissolves in a solvent and has reducing properties. Tannic acid and hydroxy acid are suitable as reducing agent. Tannic acid and hydroxy acid can function as dispersing agents, as well as reducing agents. Such reducing agents and dispersing agents may be used solely, or in combination.

There is no limitation regarding tannic acid, and anything generally classified as "tannic acid" may be used, including gallotannic acid, Chinese gallotannins and the like.

Tannic acid content is preferably within a range between 0.01 g and 6 g per one valence of a metallic ion per gram. For example, in the case of monovalent silver ion, the tannic acid content per 1 gram of silver ion is between 0.01 g and 6 g; in the case of trivalent gold ion, the tannic acid content per 1 gram of gold ion is between 0.03 g and 18 g. If the tannic acid content is too low, a reduction is insufficient; if the tannic acid content is too high, an absorption will be excessive and there is a possibility that a residue will remain in the electrically conductive ink. A more preferable tannic acid content is not less than 0.02 g but not more than 1.5 g.

1-4) Other constituting components of the metal colloid liquid

The metal colloid liquid used in the present invention may contain a surface active agent. In case of an electrically conductive ink of multi-component solvent type, roughening of a surface of the film due to differences in vaporization pace among components at a time of drying and localization of the solid content are likely to occur. The metal colloid used in the present invention makes it possible to provide an electrically conductive ink making it possible to form a homogenous film free from these disadvantages.

There is no particular limitation regarding the surface active agent to be included, and any of the following may be used: an anionic surface active agent, a cationic surface active agent, or a nonionic surface active agent, such as alkylbenzene-sulfonate, quaternary ammonium salt and the like. However, because adding a small amount of a fluorine surface active agent makes it possible to obtain a desired effect, such fluorine surface active agent is preferable.

If a content of surface active agent is too low, the desired effect cannot be obtained; if the content of surface active agent is too high, the excessive surface active agent will be impurities remained in the film and will impair conductivity of the film. A preferable included amount of a surface active agent is between 0.01 part by weight and 5 parts by weight per 100 parts by weight of solvent.

Further, the metal colloidal dispersion used in the present invention may contain, in addition, another additive in order to modify property of the dispersion. There is no particular limitation regarding the other addition agent, and polyhydric alcohols that are appropriately miscible with water (for example, 1,3-propanediol, glycerin, ethylene glycol, etc.), a defoaming agent, a levering agent, a thickening agent and the like may for example be used.

There is no particular limitation regarding the solvent contained in the metal colloid liquid used in the present invention, provided that a chosen solvent is able to successfully disperse the above-described metal colloid particles. Water and/or a water-soluble solvent can for example be used. The use of water and/or a water-soluble solvent is preferable, as it is more environmentally friendly.

2) Production of the metal colloid liquid

There is no particular limitation regarding the production method of the metal colloid liquid in accordance with the present invention. Such a production method can for example be a method in which the dispersion containing metal colloid particles is prepared and then washed. Such a process, in which the dispersion including metal colloid particles is synthesized, may for example include dispersing a metallic salt or a metallic ion in a liquid through a use of a dispersing agent, and reducing the dispersed metallic salt or metallic ion. Such reduction is preferably conducted using a chemical reduction method.

Regarding a starting material in order to obtain the metallic component to be contained in the metal colloid liquid, the following can for example be used: silver salts (for example, silver nitrate, silver sulfate, silver chloride, silver oxide, silver acetate, silver nitrite, silver chlorate, silver sulfide, etc.), gold salts (for example, aurochloric acid, potassium chloroaurate, sodium chloroaurate, etc.), platinum salts (for example, platinum chloride, platinous chloride, platinum oxide, platinum potassium chloride, etc.), palladium salts (for example, palladium nitrate, palladium acetate, palladium chloride, palladium oxide, palladium sulfate, etc.) and the like. However, there is no limitation in this regard, provided that a chosen starting material is able to dissolve in an appropriate solvent and is able to be reduced. Further, the above examples may be used independently or in combination.

There is no particular limitation regarding a method to reduce the metallic salt. A reducing agent may be used to carry out the reduction. Further, light (for example ultraviolet radiation), electron beam, thermal energy or the like may be used to carry out the reduction.

Regarding the reducing agent, the following can for example be used: amine compounds (for example, dimethylethanolamine, methyl diethanolamine, triethanolamine, phenidone, hydrazine, etc.); hydrides (for example, sodium boron hydride, hydrogen iodide, hydrogen gas, etc.); oxides (for example, carbon monoxide, sulfurous acid, etc.); low-valent metallic salts (for example, iron sulfate, iron oxide, ferrous fumarate, iron lactate, iron oxalate, iron sulfide, tin acetate, tin chloride, tin diphosphate, tin oxalate, tin oxide, tin sulfate, etc.); organic compounds (for example, formaldehyde, hydroquinone, pyrogallol, tannin, tannic acid, salicylic acid, D-glucose, and other like sugars) and the like. However, there is no limitation in this regard, provided that a chosen reducing agent is able to dissolve in the dispersion medium and to reduce the metallic salt. In the case that the reducing agent as above is used, a reducing effect may also be enhanced by using, in addition, light and/or heat.

Examples of a method to produce the metal colloid liquid by using the metallic salt, the dispersing agent and the reducing agent include a method in which the metallic salt is dissolved into purified water or the like so as to prepare a metallic salt solution, and gradually adding the metallic salt solution into an aqueous solution in which the dispersing agent and the reducing agent are dissolved.

In the metal colloid liquid prepared as above, the dispersing agent and a residue of the reducing agent are contained besides metal colloid particles, and an electrolytic concentration of the metal colloid liquid is high as a whole. Because a conductivity of the metal colloid liquid in such a state is high, the metal colloid particles are likely to coagulate and precipitate. Washing the solution containing the metal colloid particles to remove an excess of electrolytes thereof makes it possible to obtain a metal colloid liquid having a conductivity of 10 mS/cm or lower.

Examples of the washing method as mentioned above include the following three methods. A first method repeats the following steps several times: a step of letting the metal colloid liquid obtained as described above stand for a definite period of time, a step of removing a resulting supernatant liquid from the metal colloid liquid, a step of adding pure water to the metal colloid liquid thus let stand from which the resulting supernatant liquid has been removed, a step of stirring a resulting liquid again, a step of letting the resulting liquid stand for a definite period of time, and a step of removing a resulting supernatant liquid from the resulting liquid. In a second method, instead of letting the metal colloid liquid stand as in the above first method, a centrifuge separation is applicable. In a third method, desalination is carried out by using a device such as an ultrafilter or an ion exchange device. The most preferable among these three methods is the third method. A liquid obtained through any of the above three methods (for example a desalinated liquid) may be condensed as appropriate.

3) Saccharide compound

The electrically conductive ink in accordance with the present invention includes a saccharide compound. The saccharide compound is equivalent in amount to at least 3% by weight and at a maximum 15% by weight of the solid content of the metal colloid liquid. The sentence "the saccharide compound is equivalent in amount to at least 3% by weight and at a maximum 15% by weight of the solid content of the metal colloid liquid" refers to the fact that the solid content of the saccharide compound is equivalent in amount to at least 3% by weight and at a maximum 15% by weight of the solid content of the metal colloid liquid. For example, in the below-described Example 2, the saccharide compound was added in an amount equal to 8 parts by weight of the solid component of the metal colloid liquid, that is to say: (weight of a solid component of MABIT [product name; 75% solid content] / weight of the solid content of the metal colloid liquid) $\times$ 100 = 8 parts by weight.

As mentioned above, the saccharide compound includes, in one molecule, a large number of hydroxyl groups. Because the electrically conductive ink in accordance with the present invention has an excellent hydrogen bonding ability, the electrically conductive ink has a good adhesiveness for materials such as glass, PET, PEN, PI and the like. Consequently, the use of the electrically conductive ink in accordance with the present invention makes it possible to obtain an electrically conductive film having both a high conductivity and a high adhesiveness to a substrate.

In the present Description, "saccharide compound" refers to a saccharide and/or a derivative thereof. The saccharide or derivative thereof may be one type of a saccharide or a derivative thereof, or may be two or more type of saccharides and/or derivatives in combination. In this case, the wording "saccharide" refers either to a saccharide having an aldehyde group and two or more alcoholic hydroxyl groups or to a saccharide having a ketone group and two or more alcoholic hydroxyl groups, the saccharide being a compound including 3 or more carbons and the derivative being a derivative of the saccharide, wherein the saccharide and derivative thereof may or may not be dehydrated and condensed.

There is no particular limitation regarding the saccharide. However, it is preferable that the saccharide be at least one selected from the group consisting of monosaccharides, disaccharides and oligosaccharides. Further, the saccharide may be an aldose or may be a ketose. There is no particular limitation regarding the monosaccharides constituting the saccharide, provided that the monosaccharides are triose or more-membered monosaccharides; however, the monosaccharides are preferably hexose (six-membered ring structure) and/or pentose (five-membered ring structure).

The monosaccharides are not particularly limited and may be sedoheptulose, glucose, fructose, ribulose, galactose, talose, mannose, apiose, ribose, xylose, erythrose, threose, glycerol aldehyde, dihydroxyacetone or the like, for example.

The disaccharides may or may not have a reducing effect, and may be maltose, lactose, sucrose, cellobiose, nigerose, sophorose, melibiose, laminaribiose, tagatose, trehalose or the like, for example.

Regarding the oligosaccharides, maltosyl-trehalose, isomaltooligosaccharide, fructooligosaccharide, galactooligosaccharide, lactosucrose and the like can for example be used as the oligosaccharides.

Examples of the derivatives include amino sugar, sugar alcohol, uronic acid, aldonic acid and the like.

There is no particular limitation regarding the amino sugar. Examples of the amino sugar include, apart from glucosamine in which a part of a hydroxyl group of the glucose has been substituted with an amino group, galactosamine, mannosamine, neuramic acid, muramic acid and the like. Amino sugar may be N-acetylated; for example, it may be N-acetylglucosamine, N-acetylgalactosamine and the like.

Further, there is no particular limitation regarding the uronic acid, and the uronic acid may be glucuronic acid, iduronic acid, galacturonic acid, gluronic acid, mannuronic acid and the like, for example. Further, uronic acid may be hyaluronic acid combining glucosamine and glucuronic acid. There is no particular limitation regarding the sugar alcohol, and the sugar alcohol may be glycerin, erythritol, arabitol, xylitol, ribotol, sorbitol, mannitol, galactitol, maltitol, lactitol, inositol, quercitol, reduced maltose, reduced starch saccharide compound (reduced starch syrup), reduced dextrin and the like.

Among the above examples, the saccharide compound is preferably at least one saccharide compound selected from the group consisting of glucose, trehalose, maltosyl-trehalose, isomaltooligosaccharide, reduced maltose, reduced starch saccharide compound, sugar alcohol and hyaluronic acid.

The above-mentioned "reduced maltose" is a sugar alcohol obtained by reducing maltose (malt sugar) and whose main component is maltitol. Examples described below used MABIT (a product of HAYASHIBARA SHOJI, INC.); however, it should be noted that the present invention is not limited to this. Further, the above "reduced starch saccharide compound" is a chain polyhydric alcohol obtained by reducing a carbonyl group of starch. Examples described below used the product HS500 (a product of HAYASHIBARA SHOJI, INC.); however, it should be noted that the present invention is not limited to this.

Saccharide compound content is at least 3% by weight and at a maximum 15% by weight of the solid content of the metal colloid liquid. In the case that the saccharide compound content is less than 3% by weight, the saccharide compound would not be enough to satisfactorily improve the adhesiveness of the electrically conductive film, thereby failing to attain sufficient adhesiveness between the electrically conductive film and the substrate. Therefore, the saccharide compound content of less than 3% by weight is not preferable. On the other hand, in the case that the saccharide compound content is more than 15% by weight, the adhesiveness between the electrically conductive film and the substrate is excellent; however, there is a possibility that the conductivity of the electrically conductive film, formed by low-temperature (less than 200°C) firing of the electrically conductive ink, will deteriorate. Therefore, the saccharide compound content of more than 15% by weight is not preferable.

The saccharide compound content is more preferably at least 5% by weight and at a maximum 10% by weight of the solid content of the metal colloid liquid, and further preferably at least 6% by weight and at a maximum 9% by weight.

A viscosity of the electrically conductive ink is preferably in a range between 1 cps and 1,000 cps, more preferably in a range between 5 cps and 900 cps, and especially preferably in a range between 30 cps and 800 cps. The viscosity in such a range allows to use a wide variety of methods in applying the electrically conductive ink or in applying the electrically conductive ink in pattern on the substrate. For example, it becomes possible to use the following methods: dipping, screen printing, spraying, bar coating, spin coating, ink jet printing, dispensing, application through brushing and the like. The electrically conductive ink in accordance with the present invention can have a high electrical conductivity and a high adhesiveness, even with such a relatively high viscosity.

4) Production of the electrically conductive ink

Because the electrically conductive ink in accordance with the present invention includes the metal colloid liquid, it is possible to obtain a conductivity of 10 mS/cm or lower. Conventional electrically conductive inks are highly reactive with a concentration of existing electrolyte components, thereby being easily condensed and precipitated; consequently, there was, in some cases, a loss of storage stability. However, because the conductivity of the electrically conductive ink in accordance with the present invention is of 10 mS/cm or lower, the storage stability of the electrically conductive ink of the present invention is sufficient, and it is possible to avoid for example loss of alkali content occurring when using a glass container as storage material, a deterioration of a storage stability thereof occurring as a result of an increase in the concentration of an electrolyte over time due to dissolution of carbonic acid gas in air.

In addition, because a conductivity of the electrically conductive ink is 10 mS/cm or lower, the electrically conductive ink has excellent stability. Furthermore, it becomes easy to produce an electrically conductive ink having a high solid component concentration, and it becomes possible to reduce volume thereof and to facilitate handling thereof during distribution and transportation. By using an appropriate solvent, the concentration of such a high-concentration electrically conductive ink may be adjusted at a later time as required for practical use.

The method of producing the electrically conductive ink in accordance with the present invention includes mixing the metal colloid liquid and the saccharide compound, wherein the saccharide compound is mixed in an amount equivalent to least 3% by weight and at a maximum 15% by weight of the solid content of the metal colloid liquid.

There is no particular limitation regarding how to mix together the metal colloid liquid and the saccharide compound, and it is possible to use a conventional method for mixing together the metal colloid liquid and the saccharide compound, for example by using a stirrer or the like.

There is no particular limitation regarding how to produce the electrically conductive ink made from a plurality of metals. For producing an electrically conductive ink for example from silver and another metal, the method described in the above "2) Production of the metal colloid liquid" may be adopted to prepare a silver colloid liquid and a colloid liquid of the other metal separately before being mixed together, and a silver ion solution and a solution containing other metal ion may be mixed together before being reduced.

5) Electrically conductive film and method for manufacturing the same

The electrically conductive film in accordance with the present invention is made using the electrically conductive ink in accordance with the present invention. The saccharide compound is included in the electrically conductive film so as to constitute at least 1% by weight and at a maximum 15% by weight.

Either after applying the electrically conductive ink in accordance with the present invention on a substrate or after applying the electrically conductive ink in pattern on the substrate in accordance with the present invention, it is possible to form the electrically conductive film by firing the electrically conductive ink at a temperature of 300°C or lower.

There is no particular limitation regarding the substrate, and examples thereof include a relatively heat-resistant substrate (for example made from heat-resistant metal, glass, ceramic or the like) and a polymer-type substrate likely to become distorted or decomposed under the effect of high temperature (for example made from polyester resin, acrylic resin, polyamide resin, polycarbonate resin, vinyl resin or the like).

There is no particular limitation regarding how to apply the electrically conductive ink on the substrate and how to apply the electrically conductive ink in pattern on the substrate, and it is possible to use the conventionally-known methods mentioned in the above 3), such as dipping. There is no limitation regarding how to conduct the above-mentioned firing, and it is possible to form the electrically conductive film by firing (for example by using a conventionally-known gear oven and the like) the electrically conductive ink applied on or applied in pattern on the substrate, so that a temperature of the electrically conductive ink is fired at 300°C or lower. In the case that the firing temperature is lower than 300°C, it is possible to avoid the decomposition of the saccharide compound included in the electrically conductive ink. This is preferable in view of the achievement of an objective of the present invention, which is to give a high conductivity and a high adhesiveness to an electrically conductive film. Accordingly, there is no absolute limitation regarding a lower limit of a firing temperature, and any firing temperature allowing to form the electrically conductive film on the substrate can be used.

With the electrically conductive ink in accordance with the present invention, it is possible to form an electrically conductive film showing a high conductivity even in the case of a low-temperature (around 100°C) heating process; as a result, it is possible to form the electrically conductive film even on a substrate having a relatively low heat resistance. A shape of the substrate can for example be plane, film-like or the like.

Further, there is no particular limitation regarding a duration of the firing operation, and any duration of the firing operation may be adopted provided that the firing operation carried out for the duration makes it possible for the firing temperature to form the electrically conductive film on the substrate and to ensure that the included amount of the saccharide is at least 1% by weight and at a maximum 15% by weight.

The saccharide compound content in the electrically conductive film produced as above can be worked out by using a method described below. First, a control electrically conductive ink, which did not contain the saccharide compound, was prepared. After the control electrically conductive ink was applied on the substrate, or after the control electrically conductive ink was applied in pattern on the substrate, the firing was conducted; then, the electrically conductive film formed on the substrate was scratched off from the substrate by using a metallic spatula or the like, and was submitted to thermogravimetric analysis (heating rate of 10°C per minute; nitrogen atmosphere). A weight reduction ratio of the film was worked out from weights of the film before and after the thermogravimetric analysis. Next, the electrically conductive ink in accordance with the present invention, that contained the saccharide compound, was produced, processed in the same manner the control electrically conductive ink was processed, and submitted to thermogravitic analysis in the same manner the control electrically conductive ink was processed. A difference in the weight reduction ratio was worked out according to Equation (1). The difference in the weight reduction is regarded as the saccharide compound content in the electrically conductive film.

$$
\begin{aligned}
\text{Saccharide compound content (\% by weight)} =\ & \text{weight reduction ratio of electrically conductive} \\
& \text{film of the present invention (\%) - weight reduction} \\
& \text{ratio of control electrically conductive film (\%)}
\end{aligned}
$$

$$........\text{Equation (1)}$$

Because the electrically conductive film in accordance with the present invention contains the saccharide compound at least 1% by weight and at a maximum 15% by weight, the adhesiveness to the substrate is high. In order to improve the adhesiveness of the substrate and the electrically conductive film, the substrate may be surface-treated. For example, the surface treatment may be attained by providing a primer layer or an electrically conductive ink absorbing layer on the substrate, by subjecting the surface of the substrate to dry processing (for example corona treatment, plasma processing, UV processing, electron beam processing, etc.), and by the other appropriate surface treatments.

Because the electrically conductive film in accordance with the present invention has a high electrical conductivity and a high adhesiveness to the substrate, the electrically conductive film can be appropriately used with the following: electromagnetic wave shielding of cathode ray tubes, infrared radiation shielding of building material or automobiles, antistatic materials of electronic devices or portable phones, heating wirings of frosted glass, wirings of circuit substrates and IC cards, electrodes of flat panel displays, coating to provide conductivity to resin, through-hole, circuit and the like.

With the electrically conductive ink in accordance with the present invention, it becomes possible to realize both an electrically conductive film having a high conductivity, and an electrically conductive film having a high adhesiveness to the substrate. As a result, it becomes possible to form a wiring pattern having an excellent conductivity without restrictions regarding a type of substrate. Further, the film is less likely peeled off from the substrate. Therefore, it is possible to apply the electrically conductive ink in accordance with the present invention to a wide variety of drawing devices, printers and the like.

Examples

The present invention is described in more details below referring to several Examples. It should be noted that the present invention is not limited to the below-described Examples.

1) Preparation of the metal colloid liquid

1-1) Preparation of silver colloid liquid A

In 50 mL of water alkalinized by adding 3 mL of a 10N NaOH aqueous solution therein, 17 g of trisodium citrate dihydrate, 0.36 g of tannic acid were dissolved. After 3 mL of a 3.87 mol/L silver nitrate aqueous solution were added therein, a resultant solution was stirred for 2 hours, whereby a silver colloid aqueous solution was obtained. By conducting dialysis of the silver colloid aqueous solution until a conductivity of the silver colloid aqueous solution reached 30 $\mu$s/cm or below, the silver colloid aqueous solution obtained as above was then desalinated. After the dialysis, the silver colloid aqueous solution was subjected to a centrifuge separation at 3,000 rpm (920 G) for 10 minutes, so as to remove aggregates of the metal colloid particles therefrom, whereby the silver colloid liquid A was obtained. Solid content in the silver colloid liquid A was worked out using a dried weight method. The solid content obtained was analyzed using a TG/DTA 300 produced by Seiko Instruments Inc., so as to work out a thermogravimetric weight loss from room temperature to 500°C at a heating rate of 10°C/minute in air. In this way, the weight loss from 100°C to 500°C was calculated out. The solid content in the silver colloid liquid A was 55% by weight, and the weight loss measured by the thermogravimetric analysis when temperature reached 500°C was 1.9% by weight.

1-2) Preparation of silver colloid liquid B

A silver nitrate aqueous solution was prepared by dissolving 1.97 g of silver nitrate in 100 ml of ion-exchanged water. Next, while adding 0.8 g of gallic acid in the 100 ml of ion-exchanged water and stirring, the silver nitrate aqueous solution prepared and 10 ml of a 1N NaOH aqueous solution as a pH adjustor were added. After a 1-hour stirring, a silver colloid aqueous solution, called silver colloid liquid B, was obtained. The silver colloid liquid B was filtrated using a ultrafilter membrane of molecular cutoff of 50,000 (a product of ADVANTEC MFS, Inc.), so as to remove ionic impurities therefrom. The solid content of the silver colloid liquid B was 55% by weight, and the weight loss measured by the thermogravimetric analysis when temperature reached 500°C was 5.0% by weight.

1-3) Preparation of the silver colloid liquid C

After dissolving 0.44 g of glycine (a product of Wako Pure Chemical Industries, special grade reagent) and 3.2 g of iron sulfate heptahydrate (a product of Wako Pure Chemical Industries, special grade reagent) in 90 ml of ion-exchanged water and adjusting a resultant solution to a pH of 7 with a sodium hydroxide aqueous solution (prepared by diluting, at an appropriate concentration, special grade reagent of Wako Pure Chemical Industries with ion-exchanged water), ion-exchanged water was added therein to make up a total amount of 128 ml.

Next, while stirring the solution of total amount of 128 ml at room temperature using a magnetic stirrer, 2 ml of an aqueous solution containing 1 g of silver nitrate (a product of Wako Pure Chemical Industries, special grade reagent) was dropped therein, so as to obtain a silver colloid liquid C. The obtained silver colloid liquid C was filtrated using a ultrafilter membrane of molecular cutoff of 50,000 (a product of ADVANTEC MFS, Inc.), so as to remove ionic impurities therefrom. The solid content of the silver colloid liquid C was 55% by weight, and the weight loss measured by the thermogravimetric analysis when temperature reached 500°C was 9.7% by weight.

1-4) Preparation of the gold colloid liquid D

A dispersing agent and a reducing agent were dissolved with ion-exchanged water so as to obtain 100 ml of solution, wherein the dispersing agent was trisodium citrate dihydrate (a product of Wako Pure Chemical Industries, special grade reagent) (6.82 g) and the reducing agent was iron sulfate heptahydrate (a product of Wako Pure Chemical Industries, special grade reagent) (5.82 g). Next, while stirring the 100ml solution at room temperature using a magnetic stirrer, 100 ml of an aqueous solution containing 2.89 g of tetrahydrate chlorauric acid (a product of Wako Pure Chemical Industries, special grade reagent) was dropped therein, whereby a gold colloid liquid D was prepared. The obtained gold colloid liquid D was filtrated using a ultrafilter membrane of a molecular cutoff of 50,000 (a product of ADVANTEC MFS, Inc.), so as to remove ionic impurities therefrom. The filtration was repeated 20 times with 100 ml of ion-exchanged water each time, using 2,000 ml of the ion-exchanged water in total. The solid content of the gold colloid liquid D was 55% by weight, and the weight loss measured by the thermogravimetric analysis when temperature reached 500°C was 9% by weight.

2) Preparation of the electrically conductive ink

A variety of electrically conductive ink was prepared by adding to the metal colloid liquid a variety of saccharide compounds as shown in Table 1, adding ion-exchanged water and other additives thereto, and finally adjusting the solid content so that the solid content reached 40% by weight. The silver colloid liquid A was used in Example 1, Examples 4 to 7 and Comparative Examples 1 to 7; the silver colloid liquid B was used in Example 2; the silver colloid liquid C was used in Examples 3 and 8; the gold colloid liquid D was used in Example 9. A line to which hydroxyethylcellulose (HEC) was added was used after being left stand for a time sufficient for the additives to dissolve.

Regarding Table 1, "glucose" refers to a special grade reagent (a product of Wako Pure Chemical Industries). The product name "MABIT" refers to reduced maltose (main component: maltitol; a product of HAYASHIBARA SHOJI, INC.). The product name "HS500" refers to reduced starch saccharide compound (a product of HAYASHIBARA SHOJI, INC.). The product name "Panorup" refers to isomaltooligosaccharide (a product of HAYASHIBARA SHOJI, INC.). The product name "HEC SP-900" refers to hydroxyethylcellulose (a product of Daicel Chemical Industries). The product name "Hydran AP-40N" refers to aqueous urethane resin (a product of DIC Corporation). Further, the column "Added amount of saccharide compound (parts by weight of solid component with respect to solid content of metallic colloid liquid)" in Table 1 shows the percentage by weight of the solid content of the saccharide compound with regard to the solid content of the metal colloid liquid.

Table 1

|  | Saccharide compound | Added amount of saccharide compound (parts by weight of solid component with respect to metallic colloid liquid) | Other additives (with respect to total parts by weight of the electrically conductive ink) | Viscosity (cps) |
|---|---|---|---|---|
| Ex. 1 | glucose | 6 |  | 6 |
| Ex. 2 | MABIT (solid content: 75%) | 8 | HEC SP-900 0.3 weight parts | 90 |
| Ex. 3 | MABIT (solid content: 75%) | 8 | HEC SP-900 1.0 weight parts | 850 |
| Ex. 4 | MABIT (solid content: 75%) | 7 | HEC SP-900 0.3 weight parts | 80 |
| Ex. 5 | HS-500 (solid content: 75%) | 6 | 1,3-propanediol 10 weight parts | 10 |
| Ex. 6 | Panorup (solid content: 75%) | 8 | 1,3-propanediol 10 weight parts |  |

(continued)

| | Saccharide compound | Added amount of saccharide compound (parts by weight of solid component with respect to metallic colloid liquid) | Other additives (with respect to total parts by weight of the electrically conductive ink) | Viscosity (cps) |
|---|---|---|---|---|
| Ex. 7 | MABIT (solid content: 75%) | 6 | | 8 |
| Ex. 8 | HS-500 (solid content: 75%) | 15 | 1,3-propanediol 10 weight parts | 10 |
| Ex. 9 | MABIT (solid content: 75%) | 10 | HEC SP-900 0.2 weight parts | 50 |
| Com. Ex. 1 | | | | 5 |
| Com. Ex. 2 | | | ethylene glycol 20 weight parts | 10 |
| Com. Ex. 3 | | | propylene glycol 20 weight parts | 13 |
| Com. Ex. 4 | | | HEC SP-900 0.3 weight parts | 90 |
| Com. Ex. 5 | | | Hydran AP-40N 8 weight parts | 12 |
| Com. Ex. 6 | MABIT (solid content: 75%) | 2 | HEC SP-900 0.3 weight parts | 75 |
| Com. Ex. 7 | MABIT (solid content: 75%) | 20 | HEC SP-900 0.3 weight parts | 90 |
| Abbreviations used in the above table "Ex." stands for "Example". "Com. Ex." stands for "Comparative Example". | | | | |

3) Performance evaluation of the electrically conductive film

3-1) Electrical conductivity evaluation

A film was obtained by applying the electrically conductive ink prepared as described in the above 2) in line on a slide glass using a dispenser (SHOTMASTER 300, with a SNA-30G needle [internal diameter: 0.14 mm]; a product of Musashi Engineering). The line was 300 $\mu$m in width, and 10 cm in length. The film thus obtained was naturally dried and then heated in a gear oven (STD type; a product of Toyo Seiki Seisaku-sho, Ltd.) under heating conditions as described below, whereby an electrically conductive film was obtained. Then, using a PORTABLE DOUBLE BRIDGE 2769 produced by Yokogawa Electric Corporation, a volume resistivity was worked out using the double bridge method. Results are shown in Table 2.

Heating conditions

Examples 1, 4 to 7, Comparative examples 1 to 5: 150°C × 1 hour
Example 2: 200°C × 1 hour
Examples 3, 9: 250°C × 1 hour

3-2) Measurement of saccharide compound content in the electrically conductive film

In order to work out a saccharide compound content in the electrically conductive film, a thermogravimetric analysis (TGA) was conducted as described above (device used for the analysis: EXSTAR6000 TG/DTA6300, a product of Seiko Instruments Inc.; heating rate of 10°C per minute; nitrogen atmosphere). A difference between (i) the weight reduction rate between before and after the thermogravimetric analysis of the electrically conductive film produced from the electrically conductive ink in Examples and Comparative Examples, and (ii) the weight reduction rate between before and after the thermogravimetric analysis of a control electrically conductive film produced without adding the saccharide compound was calculated out based on Equation 1.

3-3) Adhesiveness evaluation

After the electrically conductive ink prepared as described in 2) was applied to slide glass by brushing, then naturally dried thereon, the electrically conductive ink was heated in a gear oven (STD type; a product of Toyo Seiki Seisaku-sho, Ltd.) under heating conditions as described below, whereby an electrically conductive film was obtained. Next, the electrically conductive film was submitted to a Sellotape (registered trademark) peel test.

A Sellotape (registered trademark) peel test is a test to evaluate a film on its adhesiveness to the substrate, conducted using a mending tape No. 810 (a product of 3M). After one minute had passed since the mending tape has completely sealed the film, the mending tape was detached by holding one edge thereof and pulling at once while maintaining a 90° angle with the substrate. Evaluation was conducted using the following criteria: the test was considered as positive ("Yes") in the case that no detachment whatsoever occurred regarding a test face or in the case that a ratio of a not-detached face to the test face was 90% or more; the test was considered as negative ("No") in the case that the ratio of the non-detached face to the test face was below 90%. Results are shown in Table 2.

Table 2

|  | Volume resistivity value (μΩ/cm) | Conductivity evaluation | Adhesiveness | Adhesiveness evaluation | Included amount of saccharide compound (% by weight) |
|---|---|---|---|---|---|
| Ex. 1 | 9 | Yes | No tape peeling | Yes |  |
| Ex. 2 | 6 | Yes | No tape peeling | Yes | 6 |
| Ex. 3 | 7 | Yes | No tape peeling | Yes |  |
| Ex. 4 | 12 | Yes | No tape peeling | Yes | 5 |
| Ex. 5 | 9 | Yes | No tape peeling | Yes | 3 |
| Ex. 6 | 12 | Yes | No tape peeling | Yes |  |
| Ex. 7 | 10 | Yes | No tape peeling | Yes | 4 |
| Ex. 8 | 11 | Yes | No tape peeling | Yes | 7 |
| Ex. 9 | 12 | Yes | No tape peeling | Yes | 7 |
| Com. Ex. 1 | 7 | Yes | Complete peeling | No | - |
| Com. Ex. 2 | 10 | Yes | Complete peeling | No | - |
| Com. Ex. 3 | 11 | Yes | Complete peeling | No | - |
| Com. Ex. 4 | 13 | Yes | Complete peeling | No | - |
| Com. Ex. 5 | Higher than upper evaluation limit | No | No tape peeling | Yes | - |
| Com. Ex. 6 | 10 | Yes | Partial (50%) peeling | No | < 1 |
| Com. Ex. 7 | > 100 | No | No tape peeling | Yes | 17 |
| Abbreviations used in the above table "Ex." stands for "Example". "Com. Ex." stands for "Comparative Example". | | | | | |

As shown on Tables 1 and 2, in Comparative example 6 (in which an electrically conductive ink containing the saccharide compound constituting 2% by weight of the solid content of the metal colloid liquid was used, and in which the percentage by weight of the saccharide compound in the electrically conductive film was below 1% by weight), the adhesiveness was poor even though the electrical conductivity of the film was excellent. Further, in Comparative example 7 (in which an electrically conductive ink containing the saccharide compound which constitutes 20% by weight of the solid content of the metal colloid liquid was used, and in which the percentage by weight of the saccharide compound in the electrically conductive film was 17% by weight), a volume resistivity was high and conductivity was poor, even though the adhesiveness was satisfactory.

On the other hand, in Example 8 (in which an electrically conductive ink containing the saccharide compound which constitutes 15% by weight of the solid content of the metal colloid liquid was used, and in which the percentage by weight of the saccharide compound in the electrically conductive film was 7% by weight), both the electrical conductivity and the adhesiveness were good.

Taking the above-mentioned results and results for other Examples into consideration, it can be understood that an electrically conductive film produced from an electrically conductive ink in accordance with the present invention has excellent conductivity and excellent adhesiveness to a substrate, wherein the electrically conductive ink in accordance with the present invention contains a saccharide compound within a range between 3% by weight and 15% by weight of a solid content of a metal liquid colloid, and the electrically conductive film contains at least the saccharide compound within a range between 1% by weight and 15% by weight.

The present invention is not limited to the above embodiments, and a variety of modifications are possible within the scope of the claims. Embodiments obtained by applying as appropriate the technical means disclosed in the present Description to each of the embodiments are also included within the technical scope of the present invention.

As described above, the electrically conductive ink in accordance with the present invention includes a metal colloid liquid and a saccharide compound, wherein the saccharide compound is equivalent in amount to at least 3% by weight and at a maximum 15% by weight of a solid content of the metal colloid liquid.

As a result, it is possible to obtain a high adhesiveness to the substrate, without losing the high conductivity induced by the metal colloid, and thus to provide an electrically conductive film having both a high conductivity and a high adhesiveness to the substrate.

The detailed explanations of the invention which were given above in connection with concrete embodiments and examples are merely intended to clarify the technical contents of the present invention. Such concrete examples should not be interpreted in a restrictive sense only, and various modifications can be exercised within the spirit of the invention and the scope of the following claims.

Industrial Applicability

Because the electrically conductive ink in accordance with the present invention contains a determined amount of the saccharide compound, it is possible to produce an electrically conductive film having a high conductivity and an excellent adhesiveness. Consequently, the electrically conductive ink in accordance with the present invention is suitably applicable to a wide variety of drawing devices, printers and the like.

**Claims**

1. An electrically conductive ink comprising:

   a metal colloid liquid; and
   a saccharide compound,
   wherein the electrically conductive ink comprises the saccharide compound in an amount equivalent to at least 3% by weight and at a maximum 15% by weight of a solid content of the metal colloid liquid.

2. The electrically conductive ink according to claim 1, wherein the saccharide compound has a six-membered ring structure and/or a five-membered ring structure.

3. The electrically conductive ink according to claims 1 or 2, wherein the saccharide compound is at least one selected from the group consisting of glucose, trehalose, maltosyl-trehalose, isomaltooligosaccharide, reduced maltose, reduced starch saccharide compound, sugar alcohol and hyaluronic acid.

4. The electrically conductive ink according to any of claims 1 to 3, wherein a metal used is more noble than hydrogen in ionization series.

5. The electrically conductive ink according to any of claims 1 to 4, wherein the metal colloid liquid comprises:

the solid content whose main component is particles made from a metallic component and an organic component; and
a solvent.

6. A method of producing an electrically conductive ink according to any one of claims 1 to 5, comprising:

mixing the metal colloid liquid and the saccharide compound,
wherein the saccharide compound is mixed in an amount equivalent to at least 3% by weight and at a maximum 15% by weight of the solid content of the metal colloid liquid.

7. An electrically conductive film formed from the electrically conductive ink according to any of the claims 1 to 6, comprising the saccharide compound by at least 1% by weight and at a maximum 15% by weight.

8. A method of producing an electrically conductive film according to claim 7, comprising:

applying the electrically conductive ink according to any of claims 1 to 6 to a substrate; or
applying the electrically conductive ink in pattern on the substrate; and then firing the electrically conductive ink at a temperature of 300°C or lower, so as to form the electrically conductive film.

**Amended claims under Art. 19.1 PCT**

1. *(Amended)* An electrically conductive ink comprising a metal colloid liquid and a saccharide compound, wherein:

the saccharide compound is at least one selected from the group consisting of glucose, trehalose, maltosyltrehalose, isomaltooligosaccharide, reduced maltose, reduced starch saccharide compound, sugar alcohol and hyaluronic acid; and
the electrically conductive ink comprises the saccharide compound in an amount equivalent to at least 3% by weight and at a maximum 15% by weight of a solid content of the metal colloid liquid.

2. *(Cancelled)*

3. *(Cancelled)*

4. *(Amended)* The electrically conductive ink according to claim 1, wherein a metal used is more noble than hydrogen in ionization series.

5. *(Amended)* The electrically conductive ink according to claims 1 or 4, wherein the metal colloid liquid comprises:

the solid content whose main component is particles made from a metallic component and an organic component; and
a solvent.

6. *(Amended)* A method of producing an electrically conductive ink according to claim 1, 4, or 5, comprising:

mixing the metal colloid liquid and the saccharide compound,
wherein the saccharide compound is mixed in an amount equivalent to at least 3% by weight and at a maximum 15% by weight of the solid content of the metal colloid liquid.

7. *(Amended)* An electrically conductive film formed from the electrically conductive ink according to claim 1, 4, or 5, comprising the saccharide compound by at least 1% by weight and at a maximum 15% by weight.

8. *(Amended)* A method of producing an electrically conductive film according to claim 7, comprising:

applying the electrically conductive ink according to claim 1, 4, or 5 to a substrate; or
applying the electrically conductive ink in pattern on the substrate; and then firing the electrically conductive ink at a temperature of 300°C or lower, so as to form the electrically conductive film.

<table>
<tr><td colspan="2"><strong>INTERNATIONAL SEARCH REPORT</strong></td><td>International application No.<br>PCT/JP2008/056938</td></tr>
</table>

A.  CLASSIFICATION OF SUBJECT MATTER
*C09D11/00*(2006.01)i, *H01B1/22*(2006.01)i, *H01B13/00*(2006.01)i

According to International Patent Classification (IPC) or to both national classification and IPC

B.  FIELDS SEARCHED

Minimum documentation searched (classification system followed by classification symbols)
C09D11/00, H01B1/22, H01B13/00

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 2004-182812 A  (Ishihara Sangyo Kaisha, Ltd.),<br>02 July, 2004 (02.07.04),<br>Claims 1 to 13; Par. Nos. [0012] to [0013]<br>(Family: none) | 1,2,4-8<br>3 |
| X<br>Y | JP 2005-310703 A  (Bando Chemical Industries, Ltd.),<br>04 November, 2005 (04.11.05),<br>Claims 1 to 6<br>(Family: none) | 1,2,4-7<br>3 |
| Y | JP 2007-131741 A  (Seiko Epson Corp.),<br>31 May, 2007 (31.05.07),<br>Claim 4; Par. Nos. [0035], [0037]<br>(Family: none) | 3 |

[X] Further documents are listed in the continuation of Box C.          [ ] See patent family annex.

| | |
|---|---|
| *    Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>15 July, 2008 (15.07.08) | Date of mailing of the international search report<br>29 July, 2008 (29.07.08) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/056938

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 4-7371 A  (Canon Inc.), 10 January, 1992 (10.01.92), Page 4, upper left column, line 4 to lower left column, line 6 (Family: none) | 3 |

Form PCT/ISA/210 (continuation of second sheet) (April 2007)

**EP 2 174 993 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002324966 A
- JP 2002334618 A
- JP 2001261778 A
- JP 2002245854 A